# EUROPEAN PATENT APPLICATION

(11) **EP 4 318 726 A1**
(43) Date of publication of application: **07.02.2024**
(21) Application number: 22938760.0
(22) Date of filing: 13.05.2022
(51) Int. Cl.: H01M 10/0587

(54) **SECONDARY BATTERY AND PREPARATION METHOD THEREFOR, AND BATTERY MODULE, BATTERY PACK AND ELECTRIC APPARATUS**

(71) Applicant: Contemporary Amperex Technology Co., Limited, Ningde City, Fujian 352100 (CN)
(72) Inventor: YAN, Qingwei, Ningde, Fujian 352100 (CN); WANG, Jiazheng, Ningde, Fujian 352100 (CN); DONG, Xiaobin, Ningde, Fujian 352100 (CN)
(74) Representative: Gong, Jinping
(86) International application number: PCT/CN2022/092739
(87) International publication number: WO 2023/216241

(57) **Abstract**

This application relates to a secondary battery including a positive electrode plate and a negative electrode plate. The positive electrode plate includes a positive electrode current collector and a positive electrode film layer provided on each of two surfaces of the positive electrode current collector, the negative electrode plate includes a negative electrode current collector and a negative electrode film layer provided on each of two surfaces of the negative electrode current collector, and the negative electrode film layer includes a reaction zone opposite the positive electrode film layer and a non-reaction zone not opposite the positive electrode film layer, where a barrier layer is provided on a surface of the non-reaction zone. This application also relates to a preparation method of secondary battery, a battery module, a battery pack, and an electric apparatus.

## Description

### TECHNICAL FIELD

This application relates to the field of lithium battery technologies, and in particular, to a secondary battery and a preparation method thereof, a battery module, a battery pack, and an electric apparatus.

### BACKGROUND

In recent years, with increasingly wide use of lithium-ion batteries, lithium-ion batteries have been widely used in energy storage power supply systems such as hydroelectric, thermal, wind, and solar power plants, and many other fields including electric tools, electric bicycles, electric motorcycles, electric vehicles, military equipment, and aerospace. Along with the great development of lithium-ion batteries, higher requirements are imposed on their energy density, cycling performance, safety performance, and the like.

Currently, the industry mostly uses continuous coating for the negative electrode plate coating process, in which case there is no uncoated area (empty substrate) at the tail and head of the negative electrode plates of battery cells. Although the absence of uncoated areas provides significant advantages in production processes and capacity of electrode plates, continuous coating of negative electrode plates results in the presence of many coating layers that do not directly participate in lithium intercalation and deintercalation. This leads to consumption of some lithium, resulting in loss of some capacity and deterioration in the initial coulombic efficiency, cycling performance, and storage performance of battery cells. Therefore, existing lithium-ion batteries still need to be improved in terms of initial coulombic efficiency, cycling performance, and storage performance.

### SUMMARY

This application has been made in view of the foregoing issues. An objective of this application is to provide a secondary battery which has improved initial coulombic efficiency, cycling performance, and storage performance.

To achieve the foregoing objective, this application provides a secondary battery and a preparation method thereof, a battery module, a battery pack, and an electric apparatus.

A first aspect of this application provides a secondary battery including a positive electrode plate and a negative electrode plate, where the positive electrode plate includes a positive electrode current collector and a positive electrode film layer provided on each of two surfaces of the positive electrode current collector, the negative electrode plate includes a negative electrode current collector and a negative electrode film layer provided on each of two surfaces of the negative electrode current collector, and the negative electrode film layer includes a reaction zone opposite the positive electrode film layer and a non-reaction zone not opposite the positive electrode film layer, where a barrier layer is provided on a surface of the non-reaction zone.

Therefore, in this application, with the barrier layer provided in the non-reaction zone, during charging and discharging of the battery cell, the non-reaction zone is isolated and cannot be infiltrated by the electrolyte, which blocks the path of diffusion of lithium ions from the reaction zone to the non-reaction zone, thereby improving the initial coulombic efficiency, cycling performance, and storage performance of the secondary battery.

In any embodiment, the barrier layer is selected from a film or coating incapable of being infiltrated by electrolyte; the film includes one or more of polypropylene, polyethylene, polyester fiber, and polyvinyl chloride, optionally includes one or more of cast polypropylene, uniaxially oriented polypropylene, biaxially oriented polypropylene, polyethylene, polyester fiber, and polyvinyl chloride, and further optionally includes polyethylene; and the coating includes one or more of polyvinylidene fluoride, polytetrafluoroethylene, polyamide, polyimide, polymethyl methacrylate, polyurethane, polystyrene, polyacrylic acid, polyacrylamide, polyacrylonitrile, and a copolymer thereof.

In any embodiment, thickness of the barrier layer is 6 µm to 40 µm, optionally 10 µm to 20 µm. When the thickness of the barrier layer is within the given range, it can be ensured that the electrode plate is fully compatible with the battery cell without large deformation.

In any embodiment, the film is adhesive and has an adhesion of greater than 20 N/m. When the adhesion of the film is within the given range, the film can be effectively attached to the surface of the non-reaction zone.

In any embodiment, a spacing zone is provided along a width direction of the negative electrode plate at an end of the non-reaction zone of the negative electrode plate close to the reaction zone, and the barrier layer is provided starting from the spacing zone and extending away from the reaction zone. When the spacing zone is provided at the end of the non-reaction zone close to the reaction zone, the initial coulombic efficiency, cycling performance, and storage performance of the secondary battery can be further improved.

In any embodiment, width of the spacing zone is 5 mm to 50 mm, optionally 10 mm to 15 mm. The width of the spacing zone being within the given range can better facilitate provision of the barrier layer and more effectively isolate the electrolyte without affecting the processing of the electrode plate.

In any embodiment, depth of the spacing zone is equal to thickness of the negative electrode film layer. When the depth of the spacing zone is equal to the thickness of the negative electrode film layer, the electrolyte is prevented from infiltrating into the non-reaction zone along the negative electrode film layer at the bottom, so that the lithium ions in the reaction zone are prevented from diffusing into the non-reaction zone, thus improving the initial coulombic efficiency, cycling performance, and storage performance of the secondary battery.

In any embodiment, a side of the spacing zone close to the reaction zone is 1 mm to 10 mm, and optionally 2 mm to 4 mm, away from the reaction zone. When the distance between the side of the spacing zone close to the reaction zone and the reaction zone is within the given range, the initial coulombic efficiency and cycling performance of the secondary battery can be further improved.

A second aspect of this application further provides a preparation method of secondary battery. The method includes the following steps:
(1) preparing a positive electrode plate;
(2) preparing a negative electrode plate;
(3) preparing a separator;
(4) preparing an electrolyte; and
(5) preparing a secondary battery;

where step (2) includes a step of providing a barrier layer on the negative electrode plate; and
the secondary battery includes a positive electrode plate and a negative electrode plate, where the positive electrode plate includes a positive electrode current collector and a positive electrode film layer provided on each of two surfaces of the positive electrode current collector, the negative electrode plate includes a negative electrode current collector and a negative electrode film layer provided on each of two surfaces of the negative electrode current collector, and the negative electrode film layer includes a reaction zone opposite the positive electrode film layer and a non-reaction zone not opposite the positive electrode film layer, where a barrier layer is provided on a surface of the non-reaction zone.

Therefore, according to the method of this application, a barrier layer is provided on the non-reaction zone of the negative electrode plate through a simple process, so as to isolate the non-reaction zone and block the diffusion of lithium ions from the reaction zone to the non-reaction zone, thereby improving the initial coulombic efficiency, cycling performance, and storage performance of the secondary battery.

In any embodiment, the barrier layer is provided through a coating or adhesive process; and optionally, the barrier layer is provided through an adhesive process.

A third aspect of this application provides a battery module including the secondary battery in the first aspect of this application or a secondary battery prepared using the method in the second aspect of this application.

A fourth aspect of this application provides a battery pack including the battery module in the third aspect of this application.

A fifth aspect of this application provides an electric apparatus including at least one of the secondary battery in the first aspect of this application or a secondary battery prepared using the method in the second aspect of this application, the battery module in the third aspect of this application, or the battery pack in the fourth aspect of this application.

The battery module, battery pack, and electric apparatus in this application include the secondary battery provided in this application, and therefore have at least advantages that are the same as those of the secondary battery.

### BRIEF DESCRIPTION OF DRAWINGS

FIG. 1 is a schematic diagram of a wound battery cell of a secondary battery according to an embodiment of this application.
FIG. 2 is a schematic diagram of an unfolded negative electrode plate of the wound battery cell of the secondary battery according to the embodiment of this application shown in FIG. 1.
FIG. 3 is a schematic diagram of an unfolded negative electrode plate of a wound battery cell of a secondary battery according to another embodiment of this application.
FIG. 4 is a schematic diagram of a secondary battery according to an embodiment of this application.
FIG. 5 is an exploded view of the secondary battery according to the embodiment of this application in FIG. 4.
FIG. 6 is a schematic diagram of a battery module according to an embodiment of this application.
FIG. 7 is a schematic diagram of a battery pack according to an embodiment of this application.
FIG. 8 is an exploded view of the battery pack according to the embodiment of this application in FIG. 7.
FIG. 9 is a schematic diagram of an electric apparatus using a secondary battery as a power source according to an embodiment of this application.

### Description of reference signs:

1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following specifically discloses in detail embodiments of the secondary battery and preparation method thereof, battery module, battery pack, and electric apparatus of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60 to 120 and 80 to 110 are provided for a specific parameter, it should be understood that ranges of 60 to 110 and 80 to 120 are also expectable. In addition, if minimum limit values of a range are given as 1 and 2, and maximum limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0 to 5" means that all real numbers from "0 to 5" are listed herein, and "0 to 5" is just an abbreviated representation of a combination of these values. In addition, when a parameter is expressed as an integer greater than or equal to 2, this is equivalent to disclosure that the parameter is, for example, an integer: 2, 3, 4, 5, 6, 7, 8, 9, 10, 11, or 12.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed sequentially or randomly, and preferably, are performed sequentially. For example, a method including steps (a) and (b) indicates that the method may include steps (a) and (b) performed sequentially, or may include steps (b) and (a) performed sequentially. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In a wound or stacked battery cell, since the negative electrode plate must cover the entire positive electrode plate, the negative electrode plate must have a section of non-reaction zone that does not participate in direct lithium intercalation and deintercalation with the positive electrode plate. However, during the charging process of the battery cell, lithium ions from the positive electrode plate preferentially intercalate into the reaction zone of the negative electrode plate, that is, a zone opposite the positive electrode plate, and the potential of the reaction zone of the negative electrode plate gradually decreases. However, the non-reaction zone remains at a relatively high potential, and a potential difference is formed between the non-reaction zone and the reaction zone of the negative electrode plate. Driven by this potential difference, lithium ions slowly diffuse from the reaction zone to the non-reaction zone. The lithium ions intercalated into the non-reaction zone can hardly return to the positive electrode plate during the discharge process. This results in irreversible lithium loss in the positive electrode plate, and finally leads to the deterioration of the initial coulombic efficiency, cycling performance, and storage performance of the battery cell.

In this application, with the barrier layer provided in the non-reaction zone of the negative electrode plate, during charging and discharging of the battery cell, the non-reaction zone is isolated and cannot be infiltrated by the electrolyte, which blocks the path of diffusion of lithium ions from the reaction zone to the non-reaction zone, thereby improving the initial coulombic efficiency, cycling performance, and storage performance of the secondary battery.

### [Secondary battery]

In an embodiment of this application, this application provides a secondary battery including a positive electrode plate and a negative electrode plate. The positive electrode plate includes a positive electrode current collector and a positive electrode film layer provided on each of two surfaces of the positive electrode current collector, the negative electrode plate includes a negative electrode current collector and a negative electrode film layer provided on each of two surfaces of the negative electrode current collector, and the negative electrode film layer includes a reaction zone opposite the positive electrode film layer and a non-reaction zone not opposite the positive electrode film layer, where a barrier layer is provided on a surface of the non-reaction zone.

Although the mechanism is not clear, the inventors of this application have accidentally found that with the barrier layer provided in the non-reaction zone of the negative electrode plate in this application, during charging and discharging of the battery cell, the non-reaction zone is isolated and cannot be infiltrated by the electrolyte, which blocks the path of diffusion of lithium ions from the reaction zone to the non-reaction zone and reduces the irreversible lithium loss in the positive electrode plate, thereby improving the initial coulombic efficiency, cycling performance, and storage performance of the secondary battery.

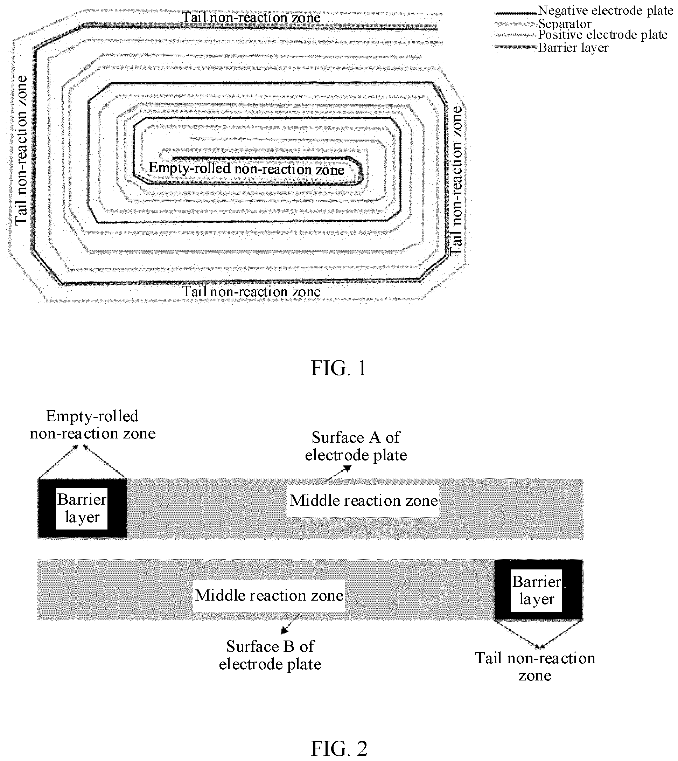

For example, as shown in FIG. 1, in a wound battery cell, a positive electrode plate, a negative electrode plate, and a separator are made into the battery cell through a winding process. The negative electrode plate includes a reaction zone opposite the positive electrode plate and a non-reaction zone not opposite the positive electrode plate, and the non-reaction zone includes an empty-rolled non-reaction zone and a tail non-reaction zone.

FIG. 2 is a schematic diagram of an unfolded negative electrode plate of the wound battery cell shown in FIG. 1. As shown in FIGs. 1 and 2, the negative electrode plate has a reaction zone in the middle, an empty-rolled non-reaction zone at one end of one surface (surface A), and a tail non-reaction zone at one end of the other surface (surface B), where a barrier layer is provided in the non-reaction zone.

In some embodiments, the barrier layer is selected from a film or coating incapable of being infiltrated by electrolyte; the film includes one or more of polypropylene, polyethylene, polyester fiber, and polyvinyl chloride, optionally includes one or more of cast polypropylene, uniaxially oriented polypropylene, biaxially oriented polypropylene, polyethylene, polyester fiber, and polyvinyl chloride, and further optionally includes polyethylene; and the coating includes one or more of polyvinylidene fluoride, polytetrafluoroethylene, polyamide, polyimide, polymethyl methacrylate, polyurethane, polystyrene, polyacrylic acid, polyacrylamide, polyacrylonitrile, and a copolymer thereof.

Due to the odorless, non-toxic, stability within -90°C to 100°C, resistance to acids and bases, resistance to organic solvents, low water absorption, and excellent electrical insulation properties of polyethylene (PE) films, the film optionally includes a PE film.

In some embodiments, the polyester fiber includes polyethylene terephthalate and polybutylene terephthalate.

In some embodiments, thickness of the barrier layer is 6 µm to 40 µm, optionally 10 µm to 20 µm.

In the embodiments of this application, the thickness of the barrier layer needs to be controlled. An excessively thin barrier layer is prone to breakage while an excessively thick barrier layer may lead to deformation of the electrode plate. When the thickness of the barrier layer is within the given range, it can be ensured that the electrode plate is fully compatible with the battery cell without large deformation.

In some embodiments, the film is adhesive and has an adhesion of greater than 20 N/m, optionally greater than 200 N/m, and further optionally greater than 400 N/m.

In the embodiments of this application, the film is adhesive. However, if the adhesion is excessively small, the film cannot be closely attached to the negative electrode film layer on the negative electrode plate and is prone to tearing. When the film has an adhesion of greater than 20 N/m, and optionally greater than the particle-to-particle cohesion in the negative electrode film layer, the film can be effectively attached to the surface of the non-reaction zone. A single-sided adhesive or double-sided adhesive film can satisfy this application as long as it can isolate the electrolyte. The film is optionally a single-sided adhesive film because as compared to the single-sided adhesive film, the increased thickness of the double-sided adhesive film results in greater deformation of the electrode plate.

In some embodiments, a spacing zone is provided along a width direction of the negative electrode plate at an end of the non-reaction zone of the negative electrode plate close to the reaction zone, and the barrier layer is provided starting from the spacing zone and extending away from the reaction zone.

With the spacing zone provided at the end of the non-reaction zone of the negative electrode plate close to the reaction zone, the injected electrolyte can be prevented from infiltrating into the non-reaction zone, so that the lithium ions in the reaction zone are prevented from diffusing into the non-reaction zone, thereby further improving the initial coulombic efficiency, cycling performance, and storage performance of the secondary battery.

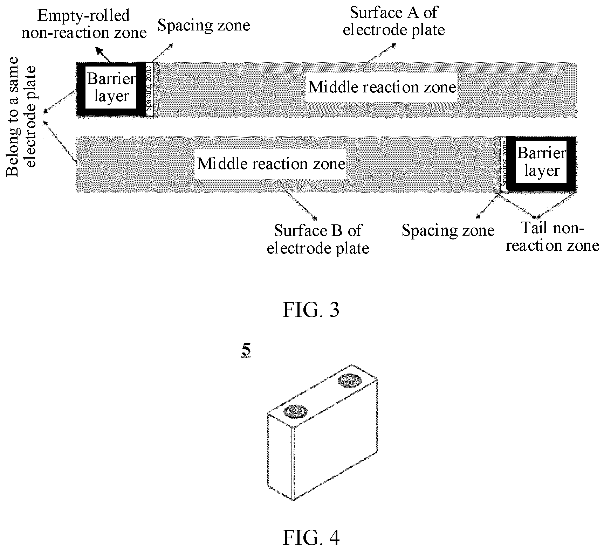

FIG. 3 is a schematic diagram of an unfolded negative electrode plate of a wound battery cell of a secondary battery according to another embodiment of this application. As shown in FIG. 3, the negative electrode plate has a reaction zone in the middle, an empty-rolled non-reaction zone at one end of one surface (surface A), and a tail non-reaction zone at one end of the other surface (surface B), where a spacing zone is provided along a width direction of the negative electrode plate at an end of the non-reaction zone close to the reaction zone, and the barrier layer is provided starting from the spacing zone and extending away from the reaction zone. More specifically, the barrier layer is provided on the bottom surface of the spacing zone, on the side surface of the spacing zone close to the non-reaction zone, and on the non-reaction zone far away from the reaction zone.

In some embodiments, width of the spacing zone is 5 mm to 50 mm, optionally 10 mm to 15 mm.

An excessively large width of the spacing zone affects the processing performance of the electrode plate, and particularly, will lead to uneven compression of the electrode plate in the cold pressing stage. An excessively small width affects the subsequent film coating process in the non-reaction zone, resulting in the film not being tightly attached and the electrolyte penetrating from the bottom. The width of the spacing zone being within the given range can better facilitate provision of the barrier layer and more effectively isolate the electrolyte without affecting the processing of the electrode plate.

In some embodiments, depth of the spacing zone is equal to thickness of the negative electrode film layer.

If the depth of the spacing zone is less than the thickness of the negative electrode film layer, meaning that the negative electrode film layer is provided at the bottom of the spacing zone, the injected electrolyte infiltrates into the non-reaction zone along the negative electrode film layer at the bottom, making it impossible to prevent the lithium ions in the reaction zone from diffusing into the non-reaction zone. Therefore, the depth of the spacing zone is equal to the thickness of the negative electrode film layer, meaning that the bottom of the spacing zone is the current collector of the negative electrode plate.

In some embodiments, a side of the spacing zone close to the reaction zone is 1 mm to 10 mm, and optionally 2 mm to 4 mm, away from the reaction zone.

If the side of the spacing zone close to the reaction zone is directly attached to the edge of the reaction zone, the safety of the battery cell is affected, and lithium precipitation may occur at the edge of the reaction zone in the case of slight misalignment of the positive and negative electrode plates. If the side of the spacing zone close to the reaction zone is far from the reaction zone, the negative electrode film layer between them will still consume lithium, compromising the improvements to the initial coulombic efficiency and cycling performance of the battery cell. Therefore, when the distance between the side of the spacing zone close to the reaction zone and the reaction zone is within the given range, the initial coulombic efficiency and cycling performance of the secondary battery can be further improved.

In an embodiment of this application, a preparation method of secondary battery is provided. The method includes the following steps:
(1) preparing a positive electrode plate;
(2) preparing a negative electrode plate;
(3) preparing a separator;
(4) preparing an electrolyte; and
(5) preparing a secondary battery;

where step (2) includes a step of providing a barrier layer on the negative electrode plate; and
the secondary battery includes a positive electrode plate and a negative electrode plate, where the positive electrode plate includes a positive electrode current collector and a positive electrode film layer provided on each of two surfaces of the positive electrode current collector, the negative electrode plate includes a negative electrode current collector and a negative electrode film layer provided on each of two surfaces of the negative electrode current collector, and the negative electrode film layer includes a reaction zone opposite the positive electrode film layer and a non-reaction zone not opposite the positive electrode film layer, where a barrier layer is provided on a surface of the non-reaction zone.

In some embodiments, the barrier layer is provided through a coating or adhesive process; and optionally, the barrier layer is provided through an adhesive process.

The barrier layer that prevents electrolyte infiltration is very important and can be provided through the coating or adhesive process. Since the coating process requires steps such as equipment stirring, coating, and baking, the process is more complex than the adhesive process, optionally, the barrier layer is provided through the adhesive process.

In some embodiments, the method further includes providing a spacing zone along a width direction of the negative electrode plate at an end of the non-reaction zone of the negative electrode plate close to the reaction zone, where the spacing zone is provided by washing, polishing and grinding, or intermittent coating.

In addition, the following describes a secondary battery, a battery module, a battery pack, and an electric apparatus in this application with appropriate reference to the accompanying drawings.

Normally, the secondary battery includes a positive electrode plate, a negative electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

### [Positive electrode plate]

The positive electrode plate includes a positive electrode current collector and a positive electrode film layer provided on at least one surface of the positive electrode current collector, and the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a well-known positive electrode active material used for batteries in the art. In an example, the positive electrode active material may include at least one of the following materials: olivine-structured lithium-containing phosphate, lithium transition metal oxide, and respective modified compounds thereof. However, this application is not limited to these materials, and may also use other conventional materials that can be used as the positive electrode active material of the battery. One of these positive electrode active materials may be used alone, or two or more of them may be used in combination. An example of the lithium transition metal oxide may include but is not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM₃₃₃ for short), LiNi_{0.5}Co_{0.2}Mn_{0.3}O₂ (NCM₅₂₃ for short), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short), and LiNi_{0.8}Co_{0.1}Mn_{0.1}O₂ (NCMsn for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, the positive electrode film layer may further optionally include a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared by using the following manners: the constituents used for preparing the positive electrode plate, for example, the positive electrode active material, the conductive agent, the binder, and any other constituent, are dissolved in a solvent (for example, N-methylpyrrolidone) to form a positive electrode slurry; the positive electrode slurry is applied onto the positive electrode current collector, and processes such as drying and cold pressing are performed to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for batteries in the art. In an example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, and may also use other conventional materials that can be used as the negative electrode active material of the battery. One of these negative electrode active materials may be used alone, or two or more of them may be used in combination.

In some embodiments, the negative electrode film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other promoters such as a thickener (for example, sodium carboxymethyl cellulose (CMC-Na)).

In some embodiments, the negative electrode plate may be prepared by using the following manners: the constituents used for preparing the negative electrode plate, for example, the negative electrode active material, the conductive agent, the binder, and any other constituent, are dissolved in a solvent (for example, deionized water) to form a negative electrode slurry; the negative electrode slurry is applied onto the negative electrode current collector, and processes such as drying and cold pressing are performed to obtain the negative electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate (ethylene carbonate), propylene carbonate (propylene carbonate), ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

### [Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly (battery cell) through winding or lamination.

In some embodiments, the secondary battery may include an outer package. The outer package is used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

The secondary battery is not limited to any specific shape in this application, and the secondary battery may be cylindrical, rectangular, or of any other shape. For example, FIG. 4 shows a secondary battery 5 of a rectangular structure as an example.

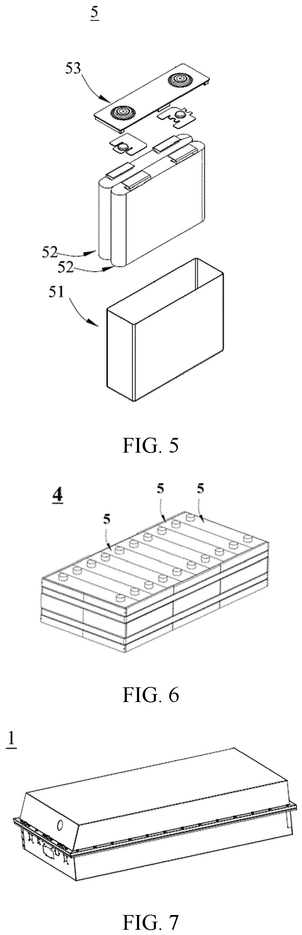

In some embodiments, referring to FIG. 5, the outer package may include a housing 51 and a cover plate 53. The housing 51 may include a base plate and a side plate connected onto the base plate, where the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 6 shows a battery module 4 as an example. Referring to FIG. 6, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened through fasteners.

Optionally, the battery module 4 may further include a housing with accommodating space, and the plurality of secondary batteries 5 are accommodated in the accommodating space.

In some embodiments, the battery modules may be further assembled into a battery pack, and the battery pack may include one or more battery modules. The specific quantity may be chosen by persons skilled in the art according to use and capacity of the battery pack.

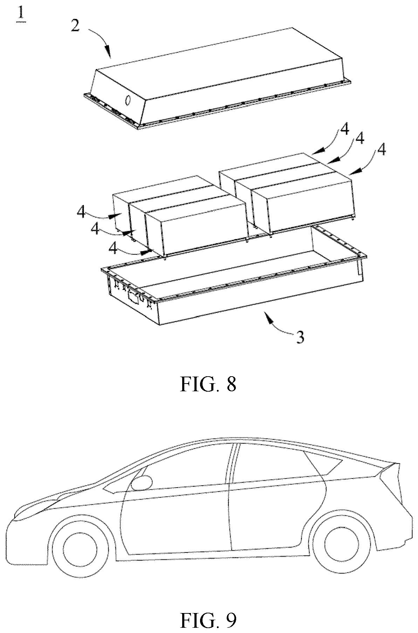

FIGs. 7 and 8 show a battery pack 1 as an example. Referring to FIGs. 7 and 8, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 9 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

### (1) Preparation of positive electrode plate

The positive electrode active material lithium iron phosphate, conductive agent acetylene black, and binder polyvinylidene fluoride (PVDF) were mixed in the mass ratio of 96:2:2, and the solvent N-methylpyrrolidone (NMP) was added. The mixture was stirred by a vacuum stirrer to a uniform system, thus obtaining a positive electrode slurry. The positive electrode slurry was evenly applied on two surfaces of the positive electrode current collector aluminum foil with a thickness of 12 µm. The product was dried at 115°C for 15 min. Cold pressing was performed to obtain a positive electrode film layer with a single-side thickness of 84 µm, and slitting was performed to obtain a positive electrode plate with a length of 605 mm and a film width of 88 mm. The coating weight was 20 mg/cm² and the compacted density was 2.4 g/cm³.

### (2) Preparation of negative electrode plate

The negative electrode active material artificial graphite, conductive agent acetylene black, thickener sodium carboxymethyl cellulose (CMC), and binder SBR were mixed in the mass ratio of 96.4:1:1.2:1.4, and the solvent deionized water was added. The mixture was stirred by a vacuum stirrer to a uniform system, thus obtaining a negative electrode slurry. The negative electrode slurry was evenly applied on two surfaces of the negative electrode current collector copper foil with a thickness of 8 µm. The product was dried at 115°C for 15 min. Cold pressing was performed to obtain a negative electrode film layer with a single-side thickness of 61 µm, and slitting was performed to obtain a negative electrode plate with a length of 735 mm and a film width of 93 mm. The coating weight of the negative electrode plate was 9.4 mg/cm² and the compacted density was 1.55 g/cm³. The negative electrode plate includes a reaction zone opposite the positive electrode film layer and a non-reaction zone not opposite the positive electrode film layer (that is, an empty-rolled non-reaction zone and a tail non-reaction zone). A polyethylene film with single-sided adhesion was attached to the non-reaction zone of the negative electrode plate as a barrier layer, where the polyethylene film had an adhesion of 470 N/m and a thickness of 20 µm.

### (3) Preparation of electrolyte

Ethylene carbonate (EC), ethyl methyl carbonate (EMC), and diethyl carbonate (DEC) were mixed in a mass ratio of 1:1:1 to obtain an organic solvent. Fully dried electrolyte salt LiPF₆ was dissolved in the organic solvent, with a concentration of the electrolyte salt being 1 mol/L. The solution was well mixed to obtain the electrolyte.

### (4) Preparation of separator

A 12 µm thick polyethylene film was selected as the separator.

### (5) Preparation of secondary battery

The positive electrode plate, the separator, and the negative electrode plate were sequentially stacked so that the separator was located between the positive electrode plate and the negative electrode plate to provide separation. Then the resulting stack was wound to obtain a bare cell. The bare cell was placed into an outer package and dried. Then electrolyte was injected according to the injection factor of 4.2 g/Ah, and processes such as vacuum sealing, standing, formation, and shaping were performed to obtain a secondary battery with a capacity of about 3 Ah.

### Examples 2 and 3

The preparation of the secondary battery was similar to that in Example 1. The difference was that during preparation of the negative electrode plate, a polyethylene film with single-sided adhesion was attached to the non-reaction zone of the negative electrode plate as the barrier layer, where adhesion of the polyethylene films was 450 N/m and thicknesses were 6 µm and 40 µm, respectively.

### Examples 4 to 6

The preparation of the secondary battery was similar to that in Example 1. The difference was that during preparation of the negative electrode plate, the polyethylene film with single-side adhesion was replaced with a uniaxially oriented polypropylene film with single-side adhesion, a polyethylene terephthalate film with single-side adhesion, and a polyvinyl chloride film with single-side adhesion, respectively.

### Example 7

The preparation of the secondary battery was similar to that in Example 1. The difference was that during preparation of the negative electrode plate, polytetrafluoroethylene was applied to the non-reaction zone of the negative electrode plate as a barrier layer, where the thickness was 20 µm.

### Example 8

The preparation of the secondary battery was similar to that in Example 1. The difference was that during preparation of the negative electrode plate, polymethyl methacrylate was applied to the non-reaction zone of the negative electrode plate as a barrier layer, where the thickness was 20 µm.

### Example 9

The preparation of the secondary battery was similar to that in Example 1. The difference was that during preparation of the negative electrode plate, a spacing zone was provided along the width direction of the negative electrode plate at the end of the non-reaction zone of the negative electrode plate close to the reaction zone, where the spacing zone was formed by removing the negative electrode film layer through polishing and grinding, the spacing zone had a width of 15 mm and a depth equal to the thickness of the negative electrode film layer, namely 61 µm, the distance between the side close to the reaction zone and the reaction zone was 4 mm, and the barrier layer was provided starting from the spacing zone and extending away from the reaction zone.

### Examples 10 and 11

The preparation of the secondary battery was similar to that in Example 9. The difference was that the widths of the spacing zones were 5 mm and 50 mm, respectively.

### Example 12

The preparation of the secondary battery was similar to that in Example 9. The difference was that the depth of the spacing zone is 20 µm, meaning that the negative electrode film layer in the spacing zone was not entirely removed.

### Examples 13 to 17

The preparation of the secondary battery was similar to that in Example 9. The difference was that the distances between the side of the spacing zone close to the reaction zone and the reaction zone were 0 mm, 1 mm, 2 mm, 10 mm, and 13 mm, respectively.

### Comparative Example 1

The preparation of the secondary battery was similar to that in Example 1. The difference was that during preparation of the negative electrode plate, no barrier layer was provided in the non-reaction zone.

### Performance test for secondary battery

### 1. Initial coulombic efficiency of secondary battery

At 45°C, the battery was charged at 0.02C for 10 h, and the capacity measured at that time was recorded as C0. At 25°C, the battery was charged at 0.33C to 3.65 V and then charged to 0.05C at a constant voltage of 3.65 V, and the capacity measured at that time was recorded as C1. Finally, the battery was discharged to 2.5 V at 0.33C, and the capacity measured at that time is recorded as D0. The first-cycle coulombic efficiency (initial coulombic efficiency) of the secondary battery was obtained according to D0/(C0+C1)×100%.

### 2. Storage performance of secondary battery

At 45°C, the secondary battery was stored at 100%SOC (state of charge), and data was collected every 15 days for the first 60 days, and every 30 days after 60 days until the capacity decayed to 80%, and the number of storage days was recorded.

### 3. Cycling performance of secondary battery

At 45°C, the secondary battery was charged to 3.65 V at 1C, charged to 0.05C at a constant voltage of 3.65 V, and discharged to 2.5 V at 1C. The above steps were repeated for full charge and full discharge cycling testing until the capacity of the secondary battery decayed to 80% of the initial capacity, and the number of cycles was recorded.

The secondary batteries obtained in the above examples and comparative example were tested according to the above process, respectively. The specific values are shown in Table 1.

**Table 1**

| Example | Barrier layer | | Spacing zone | | | Battery performance | | |
|---|---|---|---|---|---|---|---|---|
| | Material | Thickness (µm) | Width (mm) | Depth (µm) | Distance from reaction zone (mm) | Initial coulombic efficiency (%) | Number of storage days at 80% capacity | Number of cycles at 80% capacity retention |
| Example 1 | Polyethylene film | 20 | / | / | / | 91.5 | 450 | 2218 |
| Example 2 | Polyethylene film | 6 | / | / | / | 91.6 | 453 | 2220 |
| Example 3 | Polyethylene film | 40 | / | / | / | 91.5 | 457 | 2215 |
| Example 4 | Uniaxially oriented polypropylene film | 20 | / | / | / | 91.4 | 432 | 2124 |
| Example 5 | Polyethylene terephthalate film | 20 | / | / | / | 91.3 | 429 | 2109 |
| Example 6 | Polyvinyl chloride film | 20 | / | / | / | 91.5 | 440 | 2160 |
| Example 7 | Polytetrafluoroethylene | 20 | / | / | / | 91.4 | 415 | 2106 |
| Example 8 | Polymethylmethacrylate | 20 | / | / | / | 91.3 | 406 | 2085 |
| Example 9 | Polyethylene film | 20 | 15 | 61 | 4 | 91.7 | 474 | 2286 |
| Example 10 | Polyethylene film | 20 | 5 | 61 | 4 | 91.6 | 478 | 2279 |
| Example 11 | Polyethylene film | 20 | 50 | 61 | 4 | 91.7 | 470 | 2283 |
| Example 12 | Polyethylene film | 20 | 15 | 20 | 4 | 91.5 | 454 | 2220 |
| Example 13 | Polyethylene film | 20 | 15 | 61 | 0 | 91.8 | 478 | 2286 |
| Example 14 | Polyethylene film | 20 | 15 | 61 | 1 | 91.7 | 476 | 2283 |
| Example 15 | Polyethylene film | 20 | 15 | 61 | 2 | 91.7 | 478 | 2284 |
| Example 16 | Polyethylene film | 20 | 15 | 61 | 10 | 91.6 | 469 | 2261 |
| Example 17 | Polyethylene film | 20 | 15 | 61 | 13 | 91.4 | 447 | 2206 |
| Comparative Example 1 | / | / | / | / | / | 91.2 | 382 | 2034 |

According to Table 1, the secondary batteries of all the above examples outperform the secondary battery of the comparative example in terms of initial coulombic efficiency, number of days of storage at 80% capacity, and number of cycles at 80% capacity retention.

According to comprehensive comparison, as compared to Comparative Example 1, in Examples 1 to 8, a barrier layer is provided in the non-reaction zone of the negative electrode plate, which can significantly improve the initial coulombic efficiency, storage performance, and cycling performance of the secondary batteries.

According to comprehensive comparison between Example 1 and Examples 9 to 17, when the spacing zone is provided at the end of the non-reaction zone of the negative electrode plate close to the reaction zone, the initial coulombic efficiency, storage performance, and cycling performance of the secondary battery can be further improved.

According to comprehensive comparison between Example 9 and Example 12, when the depth of the spacing zone is equal to the thickness of the negative electrode film layer, the initial coulombic efficiency, storage performance, and cycling performance of the secondary battery can be further improved.

According to comprehensive comparison between Example 9 and Examples 13 to 17, when the distance between the side of the spacing zone close to the reaction zone and the reaction zone is 1 mm to 10 mm, the initial coulombic efficiency, storage performance, and cycling performance of the secondary battery can be further improved. The secondary battery exhibits good initial coulombic efficiency, storage performance, and cycling performance when the distance between the side of the spacing zone close to the reaction zone and the reaction zone is 0 mm. However, if the side of the spacing zone close to the reaction zone is directly attached to the edge of the reaction zone, lithium precipitation may occur at the edge of the reaction zone in the case of slight misalignment of the positive and negative electrode plates, thus affecting safety of the battery cell. Therefore, the distance between the side of the spacing zone close to the reaction zone and the reaction zone is greater than 0 mm.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A secondary battery, comprising a positive electrode plate and a negative electrode plate, wherein the positive electrode plate comprises a positive electrode current collector and a positive electrode film layer provided on each of two surfaces of the positive electrode current collector, the negative electrode plate comprises a negative electrode current collector and a negative electrode film layer provided on each of two surfaces of the negative electrode current collector, and the negative electrode film layer comprises a reaction zone opposite the positive electrode film layer and a non-reaction zone not opposite the positive electrode film layer, wherein a barrier layer is provided on a surface of the non-reaction zone.

2. The secondary battery according to claim 1, wherein the barrier layer is selected from a film or coating incapable of being infiltrated by electrolyte; the film comprises one or more of polypropylene, polyethylene, polyester fiber, and polyvinyl chloride, optionally comprises one or more of cast polypropylene, uniaxially oriented polypropylene, biaxially oriented polypropylene, polyethylene, polyester fiber, and polyvinyl chloride, and further optionally comprises polyethylene; and the coating comprises one or more of polyvinylidene fluoride, polytetrafluoroethylene, polyamide, polyimide, polymethyl methacrylate, polyurethane, polystyrene, polyacrylic acid, polyacrylamide, polyacrylonitrile, and a copolymer thereof.

3. The secondary battery according to claim 1 or 2, wherein thickness of the barrier layer is 6 µm to 40 µm, optionally 10 µm to 20 µm.

4. The secondary battery according to claim 2 or 3, wherein the film is adhesive and has an adhesion of greater than 20 N/m.

5. The secondary battery according to any one of claims 1 to 4, wherein a spacing zone is provided along a width direction of the negative electrode plate at an end of the non-reaction zone of the negative electrode plate close to the reaction zone, and the barrier layer is provided starting from the spacing zone and extending away from the reaction zone.

6. The secondary battery according to claim 5, wherein width of the spacing zone is 5 mm to 50 mm, optionally 10 mm to 15 mm.

7. The secondary battery according to claim 5 or 6, wherein depth of the spacing zone is equal to thickness of the negative electrode film layer.

8. The secondary battery according to any one of claims 5 to 7, wherein a side of the spacing zone close to the reaction zone is 1 mm to 10 mm, and optionally 2 mm to 4 mm, away from the reaction zone.

9. A preparation method of secondary battery, comprising the following steps:
(1) preparing a positive electrode plate;
(2) preparing a negative electrode plate;
(3) preparing a separator;
(4) preparing an electrolyte; and
(5) preparing a secondary battery;
wherein step (2) comprises a step of providing a barrier layer on the negative electrode plate; and
the secondary battery comprises a positive electrode plate and a negative electrode plate, wherein the positive electrode plate comprises a positive electrode current collector and a positive electrode film layer provided on each of two surfaces of the positive electrode current collector, the negative electrode plate comprises a negative electrode current collector and a negative electrode film layer provided on each of two surfaces of the negative electrode current collector, and the negative electrode film layer comprises a reaction zone opposite the positive electrode film layer and a non-reaction zone not opposite the positive electrode film layer, wherein a barrier layer is provided on a surface of the non-reaction zone.

10. The method according to claim 9, wherein the barrier layer is provided through a coating or adhesive process; and optionally, the barrier layer is provided through an adhesive process.

11. A battery module, comprising the secondary battery according to any one of claims 1 to 8 or a secondary battery prepared using the method according to claim 9 or 10.

12. A battery pack, comprising the battery module according to claim 11.

13. An electric apparatus, comprising at least one of the secondary battery according to any one of claims 1 to 8, the secondary battery prepared using the method according to claim 9 or 10, the battery module according to claim 11, or the battery pack according to claim 12.
